# EUROPEAN PATENT APPLICATION

(11) **EP 2 096 613 A1**
(43) Date of publication of application: **02.09.2009**
(21) Application number: 09000414.4
(22) Date of filing: 14.01.2009
(51) Int. Cl.: G09B 5/00

(54) **Electronic educational game**

(30) Priority: 30.01.2008 ES 200800233
(71) Applicant: Educocio, S.L., 08190 Sant Cugat del Vallés Barcelona (ES)
(72) Inventor: Maxenchs Tenorio, Jose, 08172 Sant Cugat del Vallés (Barcelona) (ES)
(74) Representative: Isern-Jara, Nuria

(57) **Abstract**

Electronic educational game for teaching children comprising a main casing (1) and a plurality of independent cards (2), whose said main casing (1) includes a bar code reading device (3) associated by means of electrical connections (4) to a phonographic equipment (5) provided with a sound recording storage unit, being provided each one of the independent cards (2) with a corresponding bar code (2a) inserted, in such a way that when the reading device (3) reads the specific bar code (2a), this sends a signal to the phonographic equipment (5) emitting a preestablished sound stating that the game operation was right or wrong.

## Description

### OBJECT OF THE INVENTION

The present Invention relates to an educational game that has appreciable innovations and advantages compared to other toys with the same purpose.

More specifically, the invention is aimed at an educational learning game provided with a bar code reading device that can be easily used by the user.

### BACKGROUND OF THE INVENTION

The continuous effort made by manufacturers is well known within the toy industry to design new games and/or toys that are intended for teaching children with the aim of these games being educational and at the same time being amusing for the young public.

However, none of the toys or games with a teaching aim known by the applicant, foresees the existence of an invention that provides the characteristics which are described in this invention.

### DESCRIPTION OF THE INVENTION

The present invention has been developed for the purpose of providing an educational game that solves the above-mentioned disadvantages, in addition, also contributing other additional advantages that will become clear from the description that is given below.

Therefore, the aim of this present invention is to provide a novel electronic educational game that is formed by a main casing and a plurality of independent cards, and is characterised in that said main casing includes a bar code reading device associated by means of electrical connections to a phonographic equipment provided with a sound recording storage unit, wherein it is provided each one of the independent cards with a corresponding bar code, in such a way that when the reading device reads a specific bar code, it sends a signal with a pre-set sound to the phonographic equipment, for example asking a question, stating if the an operation of the game is right or wrong or reading the content of the card. One advantage of the game described is that it does not require a plurality of push buttons which in line with the age of the user could present a certain difficulty.

This game satisfactorily fulfils the proposed objects of an educational function and with low manufacturing costs and, it is especially simple to use by the user.

In a preferred embodiment of the invention, the casing includes at least two hollow inner recesses, the contour and sizes of which correspond to the contour and sizes of the independent cards in such a way that allows the cards to be held in an orderly manner and not scattered.

In accordance with another aspect of the invention, the game is provided with a data storage unit that includes at least two game working modes that increase the possibilities of the gaming equipment.

Other characteristics and advantages of the educational game object of this present invention will become clear from a description of a preferred embodiment, but it is not exclusive, the drawings that are attached are by way of illustration but without being in any way limiting, wherein

### BRIEF DESCRIPTION OF THE DRAWINGS

Figure 1. - It is a perspective view of the casing with an educational game according to the present invention; and
Figure 2. - It Shows a simplified diagrammatic view of the different elements located in the casing of the game.

### A DESCRIPTION OF A PREFERRED EMBODIMENT

According to an embodiment of the invention, the electronic educational game basically comprises a main casing (1) and a plurality of independent cards (2) made from plastic, cardboard or another suitable material that have a graphical representation or legend printed on the front that will be used for the selecting of the card whilst the rear side has a specific bar code printed on it. Said main casing (1) is made from a mouldable plastic material that includes a bar code reading device (3) associated by means of electrical connections (4) to a phonographic equipment (5) of a known type that it is provided with a sound recording storage unit, wherein it is provided each one of the independent cards (2) with a corresponding bar code (2a), in such a way that when the reading device reads a specific bar code it sends a signal to the phonographic equipment (5) emitting a sound, for example stating how to play in the game modality chosen and by doing this asking a question. Greater detail will not be gone into in regard to the bar code reader device (3) as it can be of any currently known type, however, it is only stated that the front part of the casing (1) is provided with an opening (3a) that includes an optical reading element for the bar code.

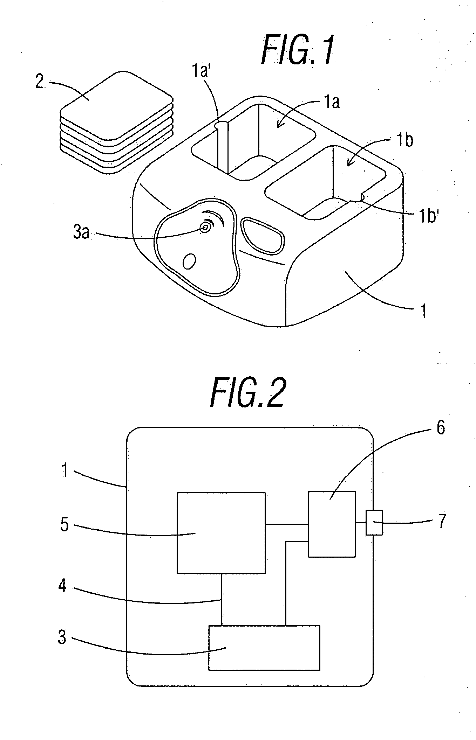

Obviously, the casing (1) is provided with acting means that includes a battery (6) (this being able to be formed by one or a plurality of batteries) and a switch (7) electrically connected to the reading device (3). In addition to facilitating the storage of the cards (2), the casing (1) includes internal hollow recesses (1a, 1b). As can be seen from figure 1, each recess (1a, 1b) provided with an internally hollow protruding portion (1a', 1b') on one of its sides that makes the removal of the card (2) easier for the user.

Therefore, the workings of the educational game is explained below:

In the first place, after switching on the game by means of the switch (7) of the main casing (1), one of the pre-programmed working modes must be selected, said selection being carried out by the scanning of the bar code of a card and subsequently, by means of the phonographic equipment (5), this will ask the child a specific question, and the child will insert one of the cards that will have been chosen previously from amongst the many and taking into account the graphical representation or legend printed (2b), close to the bar code reading device, especially by the opening (3a) in such a way that in the event of a correct answer, this means, the choice of the card (2), the phonographic equipment will emit a correct answer sound signal whilst in the event of a mistake in the answer chosen, the phonographic equipment will give out a different sound that can be a voice message.

In a practical case, and especially, in a game working mode like that previously described, the infant user will have to look for an object whose name begins with previously specified letter whilst in the other mode, the infant user must look for the initial of a previously determined object from the cards and finally, in another mode by simply passing a card over the reader it will read the contents.

In the embodiment described the bar code reading device (3) is integrated into the main casing itself (1) but it will be clear for any expert that said reading device (3) can be external to the casing itself but linked to same by any other known means.

The details, shapes, sizes and other accessorial elements, likewise the materials used in the manufacture of the educational game of the invention can be appropriately substituted by others that are technically equivalent and do not stray away from the essentiality of the invention or the scope defined by the claims that are included below.

## Claims

1. Electronic educational game comprising a main casing (1) and a plurality of independent cards (2), **characterised in that** said main casing (1) includes a bar code reading device (3) associated by means of electrical connections (4) to a phonographic equipment (5) provided with a sound recording storage unit, wherein each one of the independent cards (2) is provided with a corresponding bar code (2a) inserted, in such a way that when the reading device (3) reads the specific bar code (2a), this sends a signal to the phonographic equipment (5) emitting a preestablished sound stating that the game operation was right or wrong.

2. Educational game according to Claim 1, **characterised in that** the casing (1) includes at least two inner hollow recesses (1a, 1b), the contour and sizes of which correspond to the contour and size of the cards (2).

3. Educational game according to Claim 1, **characterised in that** the card (2) includes at least a printed graphical representation on one of its sides.

4. Educational game according to Claim 2, **characterised in that** each recess (1a, 1b) is provided with an internal hollow protruding portion (1a', 1b') on one of its sides.

5. Educational game according to Claim 1, **characterised in that** it includes an additional game board.

6. Educational game according to Claim 1, **characterised in that** it is provided with a data storage unit that includes at least two game playing modes.
